# EUROPEAN PATENT SPECIFICATION

(11) **EP 3 792 128 B1**
(45) Date of publication and mention of the grant of the patent: **26.11.2025**
(21) Application number: 19197042.5
(22) Date of filing: 12.09.2019
(51) Int. Cl.: B60W 40/06, B60R 21/013, B60W 30/08

(54) **DETECTION OF ENVIRONMENT CONDITIONS FOR A VEHICLE**
ERFASSUNG VON UMGEBUNGSBEDINGUNGEN FÜR EIN FAHRZEUG
DÉTECTION DE CONDITIONS D'ENVIRONNEMENT D'UN VÉHICULE

(43) Date of publication of application: 17.03.2021
(73) Proprietor: Qualcomm Auto Ltd., Cambridge CB4 0WZ (GB)
(72) Inventor: Gateau, Laurent, 95800 Cergy (FR); Loisy, Aurore, 95800 Cergy (FR); Bouali, Samir, 95800 Cergy (FR); Vermeulin, François-Xavier, 95800 Cergy (FR); Brunet, Mikaël, 95800 Cergy (FR); Tructin, Emilie, 95800 Cergy (FR); Le Merrer, Yann, 95800 Cergy (FR); Devavry, Arnaud, 95800 Cergy (FR)
(74) Representative: Reddie & Grose LLP

(56) References cited:
- EP-A1- 2 868 532
- EP-A1- 2 883 756
- WO-A1-2005/087561
- DE-A1- 102007 032 742
- DE-A1- 102008 034 634
- DE-A1- 102015 003 115
- US-A1- 2011 227 781
- US-A1- 2015 353 095
- US-A1- 2017 106 855

## Description

The present disclosure relates to configuring a safety arrangement in an ego vehicle.

Document WO 2005/087561 discloses a method for configuring a safety arrangement in a vehicle, wherein the method comprises obtaining sensor data from an environment detection sensor arrangement; using said sensor data for determining if there is an upcoming aquaplaning; and if that is determined to be the case, configuring a safety arrangement accordingly.

Many vehicle environment detection systems comprise one or more sensors such as for example radar sensor, LIDAR (Light detection and ranging) sensors, camera devices and ultrasonic sensors. These are used for collecting data used for safety arrangements as well as for driver assistance systems and autonomous vehicles. Certain situations such as so-called off-road situations where a vehicle has been determined to have left the road may require activation of a safety arrangement, and are detected only when the vehicle has been in such a situation during a certain time. Examples of off-road situations are when driving into a ditch, onto a ramp, airborne (all wheels losing contact with the road), and driving off-road. It is evident that some off-road situations are associated with an imminent danger, and some are not. Other situations associated with the above are road areas with a changed friction, for example due to ice or sand on the road.

In order to prevent unnecessary activation of a protection, discrimination between such situations that need, or may need, activation of a safety arrangement and those that do not need activation of a safety arrangement is desired. At the same time, a quick decision is necessary, since restraint systems generally used to avoid occupant motion during the event, like electrical belts, require several hundreds of milliseconds before being fully efficient. Furthermore, for optimal protection in case of a rollover event, the deployment of the rollover restraint systems has to occur before the head of the occupant is too close from the windows or the interior of the car.

The object of the present disclosure is to provide a more efficient use of vehicle safety systems.

This object is obtained by means of a method for configuring a safety arrangement in an ego vehicle, wherein the method comprises obtaining sensor data from an environment detection sensor arrangement and using said sensor data for determining if there is an upcoming road condition. If that is determined to be the case, the method comprises determining a type of the upcoming road condition and determining if the upcoming road condition affects the possibility of activation of one or more safety devices used in the safety arrangement. If that is determined to be the case, the method comprises configuring the safety arrangement for the determined type of upcoming road condition, wherein the configuring comprises adapting safety trigger thresholds at the safety arrangement in order to compensate for possible upcoming abnormal driving conditions; and wherein the adapting of safety trigger thresholds comprises either increasing the sensitivity of the safety arrangement, or reducing the sensitivity of the safety arrangement, in dependence of the determined type of upcoming road condition, where a reduced sensitivity reduces the risk of a false alarm.

In this manner it can be predicted whether an upcoming road condition will affect the possibility of activation of one or more safety devices, and allows advance adjustment of if and/or how the one or more safety devices should be activated.

This means that both late triggering and false alarm triggering of a safety device is avoided.

According to some aspects, the safety devices is one or more of an alert device, automatic brakes, automatic steering, belt tensioners and airbags.

This means that the present disclosure is applicable for all or at least most types of safety devices.

According to some aspects, an upcoming road condition that affects the possibility of activation of one or more safety devices is one of changed road friction, presence of a ditch, a steep slope or a ramp.

This means that the present disclosure is applicable for many types of road condition.

According to some aspects, the environment detection sensor arrangement uses any one of a radar device, a Lidar device, a camera device, an ultrasonic device, and any combination of any number of these.

According to some aspects, the vehicle safety control system uses a motion sensor arrangement for detecting motion parameters by means at least one of a gyro, an accelerometer and GNSS, Global Navigation Satellite System, equipment.

This enhances the working of the method according to the present disclosure, providing further input data.

The present disclosure also relates to a vehicle safety control system and a vehicle which are associated with the above advantages.

### BRIEF DESCRIPTION OF THE DRAWINGS

The present disclosure will now be described more in detail with reference to the appended drawings, where:
Figure 1 shows a schematic top view of an ego vehicle on a road;
Figure 2A shows a schematic side view of an ego vehicle on a road in a first position according to a first example;
Figure 2B shows a schematic side view of an ego vehicle on a road in a second position according to a first example;
Figure 3A shows a schematic side view of an ego vehicle on a road in a first position according to a second example;
Figure 3B shows a schematic side view of an ego vehicle on a road in a second position according to a second example;
Figure 4 shows a schematic top view of an ego vehicle on a road according to a third example;
Figure 5 schematically illustrates a main control unit; and
Figure 6 shows a flowchart for methods according to the present disclosure.

### DETAILED DESCRIPTION

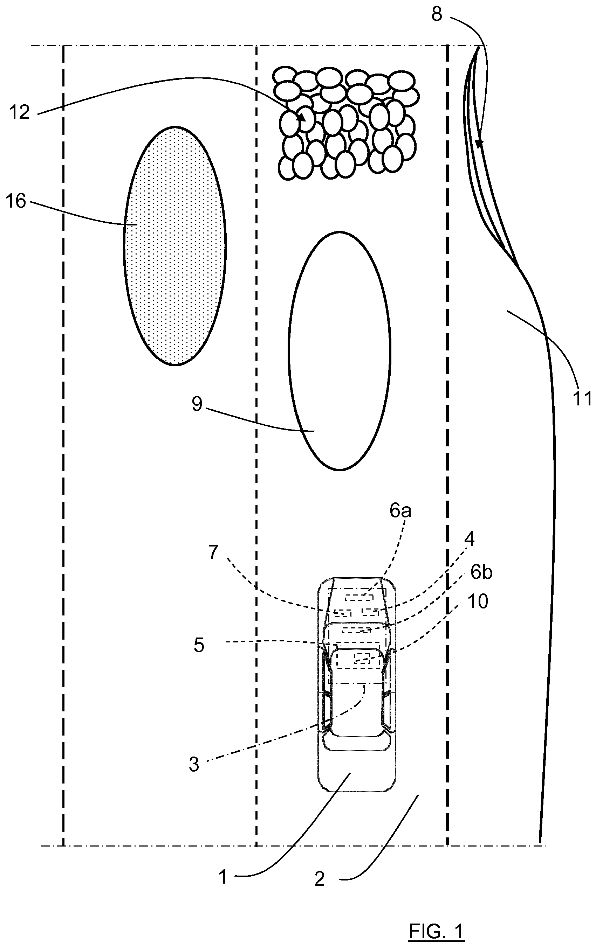

Figure 1 shows a schematical top view of an ego vehicle 1 travelling along a road 2 having a roadside 11.

The ego vehicle 1 comprises a vehicle safety control system 3 which in turn comprises a main control unit 4, a safety arrangement 5, and an environment detection sensor arrangement 6a, 6b. The environment detection arrangement 6a, 6b is adapted to detect environment parameters along the road 2 and can for example comprise one of a radar device, a Lidar device, a camera device, an ultrasonic device, and a combination of any number of these.

According to some aspects, the vehicle safety control system 3 comprises a motion sensor arrangement 7 that is adapted to detect motion parameters by means of for example one or more gyros and/or accelerometers and/or GNSS (Global Navigation Satellite System) equipment.

Certain off-road situations where the ego vehicle 1 has been determined to have left the road 2, not being in contact with the road 2, may require activation of the safety arrangement 5 that comprises one or more safety devices 10 that can be constituted by passive safety devices. The safety devices can for example comprise one or more of an alert device, automatic brakes, automatic steering, belt tensioners and airbags. Such an activation is for example required when driving into a ditch, onto a ramp, airborne (all wheels losing contact with the road), and driving off-road. On the other hand, such an activation may not be needed when driving on a bumpy or rough road 12 as schematically indicated in Figure 1.

Furthermore, other situations such as a changed road friction, for example due to a low friction surface 9, for example comprising ice or oil spill, may also require activation of a safety device 10, as well as a high friction surface 16 such as sand or pothole.

Normally, these situations can be detected by the motion detector arrangement 7, and can sometimes be determined by only one significant signal in one of the measurement axis. For example driving into a ditch or on a ramp is detected by roll rate, and airborne is detected by means of vertical acceleration.

It is desired to activate the safety arrangement as early as possible, while at the same time avoiding unnecessary activation.

Therefore, according to the present disclosure, the main control unit 4 is adapted to use the environment detection sensor arrangement 6a, 6b to detect upcoming road conditions, to determine a type of a detected upcoming road condition, and to configure the safety arrangement 5 accordingly. This means that when an upcoming road condition has been determined to affect the possibility of activation of one or more safety devices 10 used in the safety arrangement 5, the safety arrangement 5 is configured for the determined type of upcoming road condition. Such a type can for example be changed road friction 9, 16, presence of a ditch 8, a steep slope 14 or a ramp 15.

According to some aspects, when a detected upcoming road condition has been detected and determined to possibly require activation of one or more safety devices 10, the main control unit 4 is adapted to adapt safety trigger thresholds at the safety arrangement 5 in order to compensate for the possible upcoming abnormal driving conditions. This means that safety devices like electrical belts that require several hundreds of milliseconds before being fully efficient can be used in a more efficient manner.

It is evident that some off-road and other situations can be determined to be associated with an imminent danger, and some not. For example, when driving on a bumpy or rough road 12 there is normally no imminent danger, while an upcoming ditch 8 at the roadside 11 may constitute an imminent danger. By detecting upcoming road conditions, the main control unit 4 can discriminate between these cases. In this way, in case of a situation determined to be associated with an imminent danger, the reactivity of the safety arrangement 5 is increased, and otherwise sensitivity to false alarm is reduced.

By means of the present disclosure, the shape of the road 2 and/or the roadside 11 is evaluated by means of the environment detection arrangement 6a, 6b such that potential off-road situations and/or changed road friction conditions can be predicted and used to adapt algorithm thresholds from the different criteria in order to activate suitable safety devices 10 in time, while not trigging any safety devices on rough roads 12 or similar conditions that are not considered to be potential off-road situations and/or road conditions with changed road friction. According to some aspects, the ego vehicle's heading is of importance, and can be detected or estimated, for example by means of the motion sensor arrangement 7.

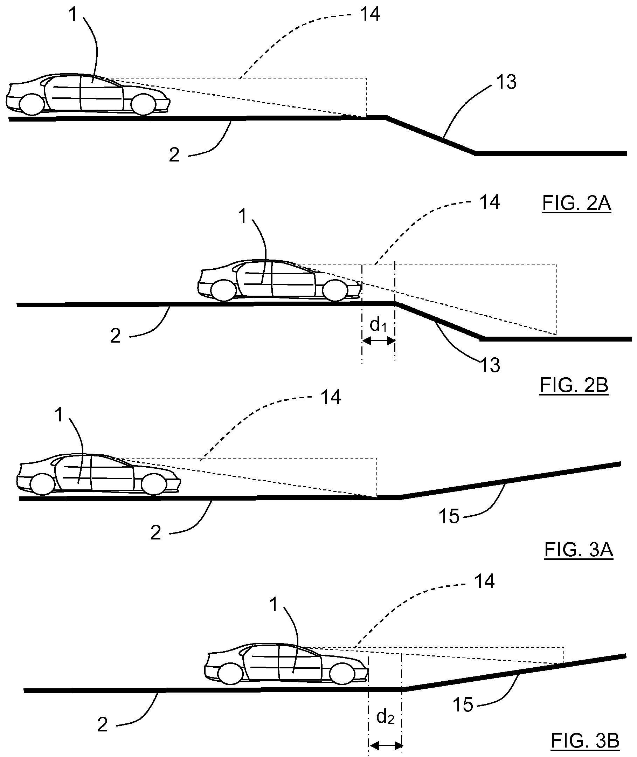

In Figure 2A showing a first example, the ego vehicle 1 travels on the road 2 towards a steep slope 13 that can give rise to an airborne situation induced by sudden change of road shape inducing loss of contact with the ground for all four wheels. The upcoming steep slope 13 is detected by means of an environment detection sensor having a certain detection field of view 14. In Figure 2B, the slope 13 is within the detection field of view 14, and it can be determined whether one or more safety devices 10 would require increased activation sensitivity, and the safety arrangement 5 is then configured accordingly. Here, in this manner, the safety arrangement 5 can be configured for the upcoming slope 13 a certain distance d₁ before the ego vehicle 1 reaches the slope 13.

Figure 3A and Figure 3B show a similar situation in a second example; here the ego vehicle 1 travels on the road 2 towards a ramp 15 that can induce loss of contact with the road 2 for two wheels on same side. In Figure 3B, the ramp 15 is within the detection field of view 14, and it can be determined whether one or more safety devices 10 would require increased activation sensitivity, and the safety arrangement 5 is then configured accordingly. In a similar manner as in the previous example, the safety arrangement 5 can be configured for the upcoming ramp 15 certain distance d₂ before the ego vehicle 1 reaches the ramp 15.

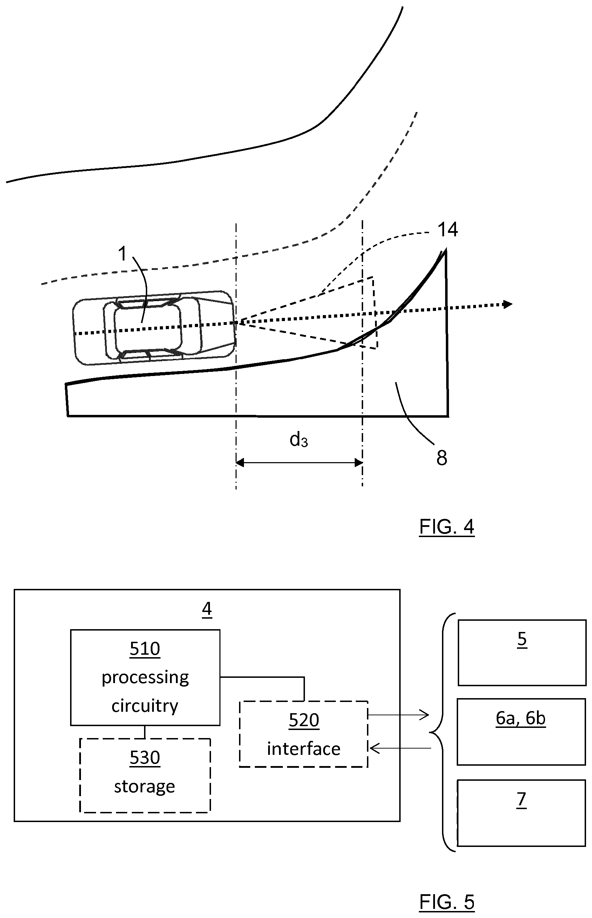

Figure 4 shows a third example with a situation where the road forms a curve with a ditch 8 at the side of the road, where the ditch 8 can induce a roll motion if the ego vehicle 1 drives down into the ditch 8. When the ditch 8 is within the detection field of view 14, it can be determined whether one or more safety devices 10 would require increased activation sensitivity, and the safety arrangement 5 is then configured accordingly. In a similar manner as in the previous example, the safety arrangement 5 can be configured for the upcoming ditch 8 certain distance d₃ before the ego vehicle 1 reaches the ditch 8. Here, the ego vehicle's heading can contribute with more information regarding whether the vehicle is headed towards the ditch or not.

In all the examples, it can be desired whether preventive measures should be taken or not at a certain distance, and thus at a certain time, before the road condition in question is reached.

In the same manner, detecting and determining upcoming road surface conditions, friction coefficients can be estimated in advance and used to adapt algorithm thresholds in the safety arrangement 5. A typical example, with reference to Figure 1, is when the ego vehicle is sliding laterally at high speed on a low friction surface 9; then the ego vehicle 1 is highly unlikely to roll. On the other hand, even at low lateral speed, in case of a high friction surface 16 such as sand or pothole, the ego vehicle is more likely to roll.

According to some aspects, for optimal protection in case of a rollover event, the deployment of rollover restraint systems comprised in the safety arrangement 5 have to occur before the head of the occupant is too close from the windows or the interior of the ego vehicle 1. In case of a high friction surface 16, the force induced is likely to create occupant motion, and deployment of the safety devices 10 has to be anticipated.

Figure 5 schematically illustrates a main control unit 4 according to aspects of the present disclosure. It is appreciated that the above described methods and techniques may be realized in hardware. This hardware is then arranged to perform the methods, whereby the same advantages and effects are obtained as have been discussed above.

Processing circuitry 510 is provided using any combination of one or more of a suitable central processing unit (CPU), multiprocessor, microcontroller, digital signal processor (DSP), etc., capable of executing software instructions stored in a computer program product, e.g. in the form of a storage medium 530. The processing circuitry 510 may further be provided as at least one application specific integrated circuit (ASIC), or field programmable gate array (FPGA).

Particularly, the processing circuitry 510 is configured to cause the main control unit 4 to perform a set of operations, or steps. For example, the storage medium 530 may store the set of operations, and the processing circuitry 510 may be configured to retrieve the set of operations from the storage medium 530 to cause the classification unit to perform the set of operations. The set of operations may be provided as a set of executable instructions. Thus, the processing circuitry 510 is thereby arranged to execute methods as herein disclosed.

The storage medium 530 may also comprise persistent storage, which, for example, can be any single one or combination of magnetic memory, optical memory, solid state memory or even remotely mounted memory.

The main control unit 4 may further comprise a communications interface 520 for communications with at least one external device such as the safety arrangement 5, the environment detection sensor arrangement 6a, 6b and according to some aspects the motion sensor arrangement 7. As such, the communication interface 520 may comprise one or more transmitters and receivers, comprising analogue and digital components and a suitable number ports for wireline or wireless communication.

The processing circuitry 510 controls the general operation of the unit, e.g. by sending data and control signals to the communication interface 520 and the storage medium 530, by receiving data and reports from the communication interface 520, and by retrieving data and instructions from the storage medium 430. Other components, as well as the related functionality, of the unit are omitted in order not to obscure the concepts presented herein.

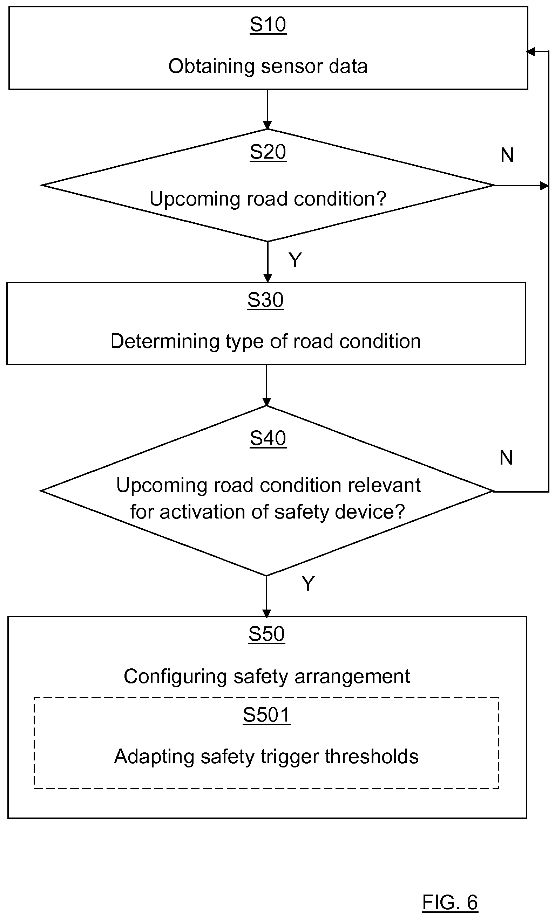

With reference to Figure 6, the present disclosure relates to a method for configuring a safety arrangement 5 in an ego vehicle 1. The method comprises obtaining S10 sensor data from an environment detection sensor arrangement 6a, 6b and using said sensor data for determining S20 if there is an upcoming road condition. If that is determined to be the case, the method comprises determining S30 a type of the upcoming road condition and determining S40 if the upcoming road condition affects the possibility of activation of one or more safety devices 10 used in the safety arrangement 5. If that is determined to be the case, the method comprises configuring S50 the safety arrangement 5 for the determined type of upcoming road condition.

According to some aspects, the configuring 40 comprises adapting S501 safety trigger thresholds at the safety arrangement 5 in order to compensate for possible upcoming abnormal driving conditions.

According to some aspects, the adapting S501 of safety trigger thresholds comprises either increasing the sensitivity of the safety arrangement 5, or reducing the sensitivity of the safety arrangement 5, in dependence of the determined type of upcoming road condition, where a reduced sensitivity reduces the risk of a false alarm.

According to some aspects, the safety devices 10 is one or more of an alert device, automatic brakes, automatic steering, belt tensioners and airbags.

According to some aspects, an upcoming road condition that affects the possibility of activation of one or more safety devices 10 is one of changed road friction 9, 16, presence of a ditch 8, a steep slope 14 or a ramp 15.

According to some aspects, the environment detection sensor arrangement 6a, 6b uses any one of a radar device, a Lidar device, a camera device, an ultrasonic device, and any combination of any number of these.

According to some aspects, the vehicle safety control system 3 uses a motion sensor arrangement 7 for detecting motion parameters by means at least one of a gyro, an accelerometer and GNSS, Global Navigation Satellite System, equipment.

The present disclosure is not limited to the examples above, but may vary freely within the scope of the appended claims. For example, there is at least one environment detection sensor in the environment detection sensor arrangement 6a, 6b, where such a sensor can be based on any suitable technology such as camera, radar, Lidar (Light detection and ranging), V2X communication, ultrasonic etc.

The types of upcoming road conditions mentioned are only examples for illustrating the present disclosure, there can of course be many other types of upcoming road conditions.

The ego vehicle in the example can be any type of vehicle.

Generally, the present disclosure relates to a vehicle safety control system 3 adapted for an ego vehicle 1 travelling on a road 2. The vehicle safety control system 3 comprises a main control unit 4, a safety arrangement 5 that in turn comprises one or more safety devices 10, and an environment detection sensor arrangement 6a, 6b. The main control unit 4 is arranged to obtain sensor data from the environment detection sensor arrangement 6a, 6b and, by means of said sensor data, determine if there is an upcoming road condition. If that is the case, the main control unit 4 is arranged to determine a type of the upcoming road condition and to determine if the upcoming road condition affects the possibility of activation of one or more safety devices 10 comprised in the safety arrangement 5. If that is the case, the main control unit 4 is arranged to configure the safety arrangement 5 for a determined type of upcoming road condition.

According to some aspects, when the safety arrangement 5 is configured for a determined type of upcoming road condition, the main control unit 4 is arranged to adapt safety trigger thresholds at the safety arrangement 5 in order to compensate for possible upcoming abnormal driving conditions.

According to some aspects, when the safety trigger thresholds are adapted, the main control unit 4 is arranged to either increase the sensitivity of the safety arrangement 5, or to reduce the sensitivity of the safety arrangement 5, in dependence of the determined type of upcoming road condition, where a reduced sensitivity reduces the risk of a false alarm.

According to some aspects, the safety devices 10 comprises one or more of an alert device, automatic brakes, automatic steering, belt tensioners and airbags.

According to some aspects, an upcoming road condition that affects the possibility of activation of one or more safety devices 10 is one of changed road friction 9, 16, presence of a ditch 8, a steep slope 14 or a ramp 15.

According to some aspects, the environment detection sensor arrangement 6a, 6b comprises any one of a radar device, a Lidar device, a camera device, an ultrasonic device, and any combination of any number of these.

According to some aspects, the vehicle safety control system 3 comprises a motion sensor arrangement 7 that is adapted to detect motion parameters by means at least one of a gyro, an accelerometer and GNSS, Global Navigation Satellite System, equipment.

The present disclosure also relates to a vehicle 1 comprising the vehicle safety control system 3 according to the above.

## Claims

1. A method for configuring a safety arrangement (5) in an ego vehicle (1), wherein the method comprises:
obtaining (S10) sensor data from an environment detection sensor arrangement (6a, 6b);
using said sensor data for determining (S20) if there is an upcoming road condition; and if that is determined to be the case,
determining (S30) a type of the upcoming road condition;
determining (S40) if the upcoming road condition affects the possibility of activation of one or more safety devices (10) used in the safety arrangement (5); and if that is determined to be the case,
configuring (S50) the safety arrangement (5) for the determined type of upcoming road condition;
wherein the configuring (40) comprises adapting (S501) safety trigger thresholds at the safety arrangement (5) in order to compensate for possible upcoming abnormal driving conditions; and wherein the adapting (S501) of safety trigger thresholds comprises either increasing the sensitivity of the safety arrangement (5), or reducing the sensitivity of the safety arrangement (5), in dependence of the determined type of upcoming road condition, where a reduced sensitivity reduces the risk of a false alarm.

2. The method according to any one of the previous claims, wherein the safety devices (10) is one or more of an alert device, automatic brakes, automatic steering, belt tensioners and airbags.

3. The method according to any one of the previous claims, wherein an upcoming road condition that affects the possibility of activation of one or more safety devices (10) is one of changed road friction (9, 16), presence of a ditch (8), a steep slope (14) or a ramp (15).

4. The method according to any one of the previous claims, wherein the environment detection sensor arrangement (6a, 6b) uses any one of a radar device, a Lidar device, a camera device, an ultrasonic device, and any combination of any number of these.

5. The method according to any one of the previous claims, wherein the vehicle safety control system (3) uses a motion sensor arrangement (7) for detecting motion parameters by means at least one of a gyro, an accelerometer and GNSS, Global Navigation Satellite System, equipment.

6. A vehicle safety control system (3) adapted for an ego vehicle (1) travelling on a road (2), the vehicle safety control system (3) comprising a main control unit (4), a safety arrangement (5) that in turn comprises one or more safety devices (10), and an environment detection sensor arrangement (6a, 6b), where the main control unit (4) is arranged to:
- obtain sensor data from the environment detection sensor arrangement (6a, 6b),
- by means of said sensor data, determine if there is an upcoming road condition; and, if that is the case, to
- determine a type of the upcoming road condition;
- determine if the upcoming road condition affects the possibility of activation of one or more safety devices (10) comprised in the safety arrangement (5); and, if that is the case, to
- configure the safety arrangement (5) for the determined type of upcoming road condition
- wherein, when the safety arrangement (5) is configured for a determined type of upcoming road condition, the main control unit (4) is arranged to adapt safety trigger thresholds at the safety arrangement (5) in order to compensate for possible upcoming abnormal driving conditions; and
- wherein, when the safety trigger thresholds are adapted, the main control unit (4) is arranged to either increase the sensitivity of the safety arrangement (5), or to reduce the sensitivity of the safety arrangement (5), in dependence of the determined type of upcoming road condition, where a reduced sensitivity reduces the risk of a false alarm.

7. The vehicle safety control system (3) according to claim 6 , wherein the safety devices (10) comprises one or more of an alert device, automatic brakes, automatic steering, belt tensioners and airbags.

8. The vehicle safety control system (3) according to any one of the claims 6-7, wherein an upcoming road condition that affects the possibility of activation of one or more safety devices (10) is one of changed road friction (9, 16), presence of a ditch (8), a steep slope (14) or a ramp (15).

9. The vehicle safety control system (3) according to any one of the claims 6 - 8, wherein the environment detection sensor arrangement (6a, 6b) comprises any one of a radar device, a Lidar device, a camera device, an ultrasonic device, and any combination of any number of these.

10. The vehicle safety control system (3) according to any one of the claims 6-9, wherein the vehicle safety control system (3) comprises a motion sensor arrangement (7) that is adapted to detect motion parameters by means at least one of a gyro, an accelerometer and GNSS, Global Navigation Satellite System, equipment.

11. A vehicle (1) comprising the vehicle safety control system (3) according to any one of the claims 6-10.

## Patentansprüche

1. Verfahren zum Konfigurieren einer Sicherheitsanordnung (5) in einem Ego-Fahrzeug (1), wobei das Verfahren Folgendes beinhaltet:
Erhalten (S10) von Sensordaten von einer Umgebungserkennungssensoranordnung (6a, 6b);
Verwenden der genannten Sensordaten zum Feststellen (S20), ob eine bevorstehende Straßenbedingung vorliegt; und wenn festgestellt wird, dass dies der Fall ist,
Bestimmen (S30) einer Art der bevorstehenden Straßenbedingung;
Feststellen (S40), ob die bevorstehende Straßenbedingung die Möglichkeit der Aktivierung einer oder mehrerer in der Sicherheitsanordnung (5) verwendeter Sicherheitsvorrichtungen (10) beeinflusst; und wenn festgestellt wird, dass dies der Fall ist,
Konfigurieren (S50) der Sicherheitsanordnung (5) für die festgestellte Art von bevorstehender Straßenbedingung;
wobei das Konfigurieren (40) das Anpassen (S501) von Sicherheitsauslöseschwellenwerten an der Sicherheitsanordnung (5) beinhaltet, um mögliche bevorstehende abnormale Fahrbedingungen zu kompensieren; und wobei das Anpassen (S501) der Sicherheitsauslöseschwellenwerte entweder das Erhöhen der Empfindlichkeit der Sicherheitsanordnung (5) oder das Verringern der Empfindlichkeit der Sicherheitsanordnung (5) in Abhängigkeit von der bestimmten Art der bevorstehenden Straßenbedingung beinhaltet, wobei eine verringerte Empfindlichkeit das Risiko eines Fehlalarms verringert.

2. Verfahren nach einem der vorherigen Ansprüche, wobei die Sicherheitsvorrichtungen (10) eines oder mehrere von einer Warnvorrichtung, automatischen Bremsen, automatischer Lenkung, Gurtstraffern und Airbags umfassen.

3. Verfahren nach einem der vorherigen Ansprüche, wobei eine bevorstehende Straßenbedingung, die die Möglichkeit der Aktivierung einer oder mehrerer Sicherheitsvorrichtungen (10) beeinflusst, eines von veränderter Straßenreibung (9, 16), Vorhandensein eines Grabens (8), einer steilen Böschung (14) und einer Rampe (15) ist.

4. Verfahren nach einem der vorherigen Ansprüche, wobei die Umgebungserkennungssensoranordnung (6a, 6b) eines von einem Radargerät, einem Lidar-Gerät, einem Kameragerät, einem Ultraschallgerät und einer beliebigen Kombination aus einer beliebigen Anzahl davon verwendet.

5. Verfahren nach einem der vorherigen Ansprüche, wobei das Fahrzeugsicherheitssteuersystem (3) eine Bewegungssensoranordnung (7) zum Erkennen von Bewegungsparametern mit Hilfe von mindestens einem von einem Gyroskop, einem Beschleunigungsmesser und GNSS-(Global Navigation Satellite System)-Ausrüstung verwendet.

6. Fahrzeugsicherheitssteuersystem (3), ausgelegt für ein auf einer Straße (2) fahrendes Ego-Fahrzeug (1), wobei das Fahrzeugsicherheitssteuersystem (3) eine Hauptsteuereinheit (4), eine Sicherheitsanordnung (5), die wiederum eine oder mehrere Sicherheitsvorrichtungen (10) umfasst, und eine Umgebungserkennungssensoranordnung (6a, 6b) umfasst, wobei die Hauptsteuereinheit (4) ausgelegt ist zum:
- Erhalten von Sensordaten von der Umgebungserkennungssensoranordnung (6a, 6b);
- Feststellen, anhand der genannten Sensordaten, ob eine bevorstehende Straßenbedingung vorliegt; und wenn dies der Fall ist,
- Bestimmen einer Art der bevorstehenden Straßenbedingung;
- Feststellen, ob die bevorstehende Straßenbedingung die Möglichkeit der Aktivierung einer oder mehrerer in der Sicherheitsanordnung (5) enthaltener Sicherheitsvorrichtungen (10) beeinflusst; und wenn dies der Fall ist,
- Konfigurieren der Sicherheitsanordnung (5) für die festgestellte Art von bevorstehender Straßenbedingung;
- wobei, wenn die Sicherheitsanordnunng (5) für eine bestimmte Art von bevorstehender Straßenbedingung konfiguriert ist, die Hauptsteuereinheit (4) zum Anpassen von Sicherheitsauslöseschwellenwerten an der Sicherheitsanordnung (5) ausgelegt ist, um mögliche bevorstehende abnormale Fahrbedingungen zu kompensieren; und
wobei, wenn die Sicherheitsauslöseschwellenwerte angepasst sind, die Hauptsteuereinheit (4) entweder zum Erhöhen der Empfindlichkeit der Sicherheitsanordnung (5) oder zum Verringern der Empfindlichkeit der Sicherheitsanordnung (5) in Abhängigkeit von der bestimmten Art der bevorstehenden Straßenbedingung beinhaltet, wobei eine verringerte Empfindlichkeit das Risiko eines Fehlalarms verringert.

7. Fahrzeugsicherheitssteuersystem (3) nach Anspruch 6, wobei die Sicherheitsvorrichtungen (10) eines oder mehrere von einer Warnvorrichtung, automatischen Bremsen, automatischer Lenkung, Gurtstraffern und Airbags umfassen.

8. Fahrzeugsicherheitssteuersystem (3) nach einem der Ansprüche 6-7, wobei eine bevorstehende Straßenbedingung, die die Möglichkeit der Aktivierung einer oder mehrerer Sicherheitsvorrichtungen (10) beeinflusst, eines von veränderter Straßenreibung (9, 16), Vorhandensein eines Grabens (8), einer steilen Böschung (14) und einer Rampe (15) ist.

9. Fahrzeugsicherheitssteuersystem (3) nach einem der Ansprüche 6-8, wobei die Umgebungserkennungssensoranordnung (6a, 6b) eines von einem Radargerät, einem Lidar-Gerät, einem Kameragerät, einem Ultraschallgerät und einer beliebigen Kombination aus einer beliebigen Anzahl davon verwendet.

10. Fahrzeugsicherheitssteuersystem (3) nach einem der Ansprüche 6-9, wobei das Fahrzeugsicherheitssteuersystem (3) eine Bewegungssensoranordnung (7) umfasst, die zum Erkennen von Bewegungsparametern mit Hilfe von mindestens einem von einem Gyroskop, einem Beschleunigungsmesser und GNSS-(Global Navigation Satellite System)-Ausrüstung ausgelegt ist.

11. Fahrzeug (1), das das Fahrzeugsicherheitssteuersystem (3) nach einem der Ansprüche 6-10 umfasst.

## Revendications

1. Procédé de configuration d'un dispositif de sécurité (5) dans un véhicule Ego (1), le procédé comprenant :
l'obtention de données de capteur (S10) à partir d'un ensemble de capteur de détection d'environnement (6a, 6b) ;
l'utilisation desdites données de capteur pour déterminer (S20) qu'une condition routière imminente existe ou non ; et si elle existe,
la détermination (S30) d'un type de la condition routière imminente ;
la détermination (S40) que la condition routière imminente affecte ou non la possibilité d'activation d'un ou plusieurs dispositifs de sécurité (10) utilisés dans l'agencement de sécurité (5) ; et si tel est le cas,
la configuration (S50) de l'agencement de sécurité (5) pour le type déterminé de condition routière imminente ;
dans lequel la configuration (40) comprend l'adaptation (S501) de seuils de déclenchement de sécurité au niveau de l'agencement de sécurité (5) afin de compenser d'éventuelles conditions de conduite anormales imminentes ; et dans lequel l'adaptation (S501) de seuils de déclenchement de sécurité comprend soit l'augmentation de la sensibilité de l'agencement de sécurité (5), soit la réduction de la sensibilité de l'agencement de sécurité (5), en fonction du type déterminé de condition routière imminente, une sensibilité réduite réduisant le risque de fausse alerte.

2. Procédé selon l'une quelconque des revendications précédentes, dans lequel les dispositifs de sécurité (10) sont un ou plusieurs d'un dispositif d'alerte, de freins automatiques, d'une direction automatique, de tendeurs de ceinture et d'airbags.

3. Procédé selon l'une quelconque des revendications précédentes, dans lequel une condition routière imminente qui affecte la possibilité d'activation d'un ou plusieurs dispositifs de sécurité (10) est l'une d'une altération de l'adhérence à la route (9, 16), de la présence d'un fossé (8), d'une pente raide (14) ou d'une rampe (15) .

4. Procédé selon l'une quelconque des revendications précédentes, dans lequel l'agencement de capteur de détection d'environnement (6a, 6b) utilise l'un quelconque d'un dispositif radar, d'un dispositif Lidar, d'un dispositif de caméra, d'un dispositif à ultrasons, et toute combinaison de n'importe quel nombre de ceux-ci.

5. Procédé selon l'une quelconque des revendications précédentes, dans lequel le système de commande de sécurité de véhicule (3) utilise un agencement de capteur de mouvement (7) pour détecter des paramètres de mouvement au moyen d'au moins l'un d'un gyroscope, d'un accéléromètre et d'un équipement de système mondial de navigation par satellite, GNSS.

6. Système de commande de sécurité de véhicule (3) conçu pour un véhicule Ego (1) circulant sur une route (2) , le système de commande de sécurité de véhicule (3) comprenant une unité de commande principale (4), un dispositif de sécurité (5) qui comprend à son tour un ou plusieurs dispositifs de sécurité (10), et un dispositif de capteur de détection d'environnement (6a, 6b), l'unité de commande principale (4) étant agencée pour :
- obtenir des données du capteur à partir de l'agencement de capteur de détection d'environnement ( 6a, 6b),
- à l'aide desdites données de capteur, déterminer qu'une condition routière imminente existe ou non ; et, si elle existe, déterminer un type de la condition routière imminente ;
- déterminer que la condition routière imminente affecte ou non la possibilité d'activation d'un ou plusieurs dispositifs de sécurité (10) compris dans de l'agencement de sécurité (5) ; et, si tel est le cas,
- configurer l'agencement de sécurité (5) pour le type déterminé de condition routière imminente
- dans lequel, lorsque l'agencement de sécurité (5) est configuré pour un type déterminé de condition routière imminente, l'unité de commande principale (4) est conçue pour adapter des seuils de déclenchement de sécurité au niveau de l'agencement de sécurité (5) afin de compenser d'éventuelles conditions de conduite anormales imminentes ; et
- dans lequel, lorsque les seuils de déclenchement de sécurité sont adaptés, l'unité de commande principale (4) est conçue pour soit augmenter la sensibilité de l'agencement de sécurité (5), soit réduire la sensibilité de l'agencement de sécurité (5), en fonction du type déterminé de condition routière imminente, une sensibilité réduite réduisant le risque de fausse alerte.

7. Système de commande de sécurité de véhicule (3) selon la revendication 6, dans lequel les dispositifs de sécurité (10) comprennent un ou plusieurs d'un dispositif d'alerte, de freins automatiques, d'une direction automatique, de tendeurs de ceinture et d'airbags.

8. Système de commande de sécurité de véhicule (3) selon l'une quelconque des revendications 6 et 7, dans lequel une condition routière imminente qui affecte la possibilité d'activation d'un ou plusieurs dispositifs de sécurité (10) est l'une d'une altération de l'adhérence à la route (9, 16), de la présence d'un fossé (8), d'une pente raide (14) ou d'une rampe (15) .

9. Système de commande de sécurité de véhicule (3) selon l'une quelconque des revendications 6 à 8, dans lequel l'agencement de capteur de détection d'environnement (6a, 6b) comprend l'un quelconque d'un dispositif radar, d'un dispositif Lidar, d'un dispositif de caméra, d'un dispositif à ultrasons et toute combinaison de n'importe quel nombre de ceux-ci.

10. Système de commande de sécurité de véhicule (3) selon l'une quelconque des revendications 6 à 9, dans lequel le système de commande de sécurité de véhicule (3) comprend un ensemble de capteur de mouvement (7) conçu pour détecter des paramètres de mouvement au moyen d'au moins l'un d'un gyroscope, d'un accéléromètre et d'un équipement de système mondial de navigation par satellite ; GNSS.

11. Véhicule (1) comprenant le système de commande de sécurité de véhicule (3) selon l'une quelconque des revendications 6 à 10.
